# FASCICULE DE BREVET EUROPEEN

(11) **EP 2 102 706 B1**
(45) Date de publication et mention de la délivrance du brevet: **06.06.2012**
(21) Numéro de dépôt: 07856829.2
(22) Date de dépôt: 18.12.2007
(51) Int. Cl.: G03B 15/06, G03B 15/035, G07C 9/00

(54) **SYSTEME DE CAPTURE D'IMAGES DE LA FACE D'UN INDIVIDU**
SYSTEM ZUM AUFNEHMEN VON BILDERN DES GESICHTS EINES INDIVIDUUMS
SYSTEM FOR TAKING IMAGES OF THE FACE OF AN INDIVIDUAL

(30) Priorité: 19.12.2006 FR 0611109
(43) Date de publication de la demande: 23.09.2009
(73) Titulaire: MORPHO, 75015 Paris (FR)
(72) Inventeur: MONTEILLIET, Gilles, 75015 Paris (FR); FOURRE, Joël-Yann, 75015 Paris (FR)
(74) Mandataire: Maillet, Alain
(86) Numéro de dépôt international: PCT/EP2007/011097
(87) Numéro de publication internationale: WO 2008/074459

(56) Documents cités:
- EP-A- 1 452 127
- EP-A2- 1 136 937
- FR-A1- 2 880 158
- US-A- 5 550 928
- US-A1- 2003 142 853

## Description

La présente invention concerne un système de capture d'images de la face d'un individu, un système d'identification faciale utilisant un tel système de capture d'images, ainsi qu'un dispositif d'éclairage pour un tel système de capture d'images. Elle trouve application dans le domaine de la reconnaissance faciale des individus.

Un procédé d'identification faciale d'un individu comprend une étape de capture d'au moins une image de sa face, une étape de traitement de l'image ainsi capturée, une étape de comparaison de l'image ainsi traitée avec des images de référence stockées dans une base de données et une étape d'identification ou de non-identification de l'individu à partir du résultat de l'étape de comparaison.

Un système d'identification faciale mettant en oeuvre un tel procédé d'identification faciale comprend un système de capture d'images de la face de l'individu et une unité de traitement.

Le système de capture d'images de la face d'un individu de l'état de la technique mettant en oeuvre l'étape de capture comprend :
- un dispositif de capture d'images, du type caméra, présentant un axe de visée dirigé vers l'endroit d'où arrive l'individu, et
- deux dispositifs d'éclairage disposés symétriquement par rapport à l'axe de visée et à distance de celui-ci, chacun comprenant des moyens de génération d'un flux lumineux destiné à éclairer la face de l'individu lors de son déplacement et dont le lobe d'éclairement représentatif de la luminance comporte un maximum, les deux lobes étant symétriques par rapport à l'axe de visée.

L'unité de traitement met en oeuvre les autres étapes du procédé d'identification.

Un individu désirant se faire identifier est invité à passer entre les deux dispositifs d'éclairage afin que le dispositif de capture puisse prendre au moins une image de sa face.

Un tel procédé d'identification est d'autant plus fiable que l'éclairage de la face de l'individu est puissant mais non saturé, homogène et non asymétrique latéralement et qu'il produit peu d'ombres. Sans quoi, l'image capturée présente des zones sur-éclairées et des zones sous-éclairées en fonction de la position de l'individu par rapport à l'axe de visée.

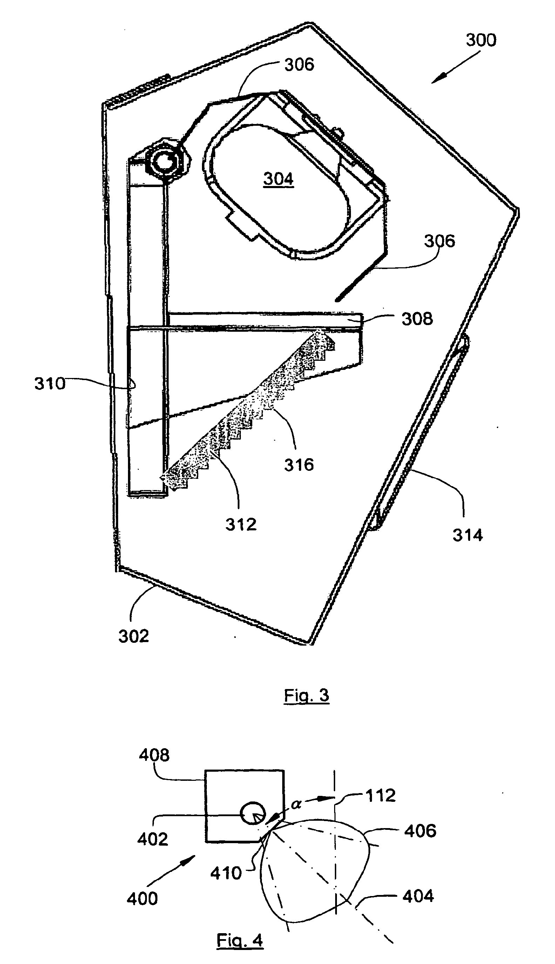

La Fig. 4 représente une vue de dessus d'un dispositif d'éclairage 400 de l'état de la technique qui comprend une cage opaque 408 percée d'une fenêtre 410 et une source lumineuse 402 du type néon formant les moyens de génération du flux lumineux et disposée à l'intérieur de la cage 408. Chaque dispositif d'éclairage émet à travers la fenêtre 410, un flux lumineux qui est représenté par un lobe d'éclairement 406 représentatif de la luminance dans un plan horizontal du flux lumineux. La droite référencée 404 passe par le maximum et le lobe d'éclairement 406 est symétrique par rapport à cette droite 404 qui présente, avec l'axe de visée 112, un angle α de l'ordre de 50° afin d'éclairer effectivement la face de l'individu et non son côté.

Un individu qui est décalé par rapport à l'axe de visée 112 est, de par la forme de chaque lobe d'éclairement 406, fortement éclairé par le dispositif d'éclairage 400 situé du côté où l'individu se trouve et faiblement éclairé par le dispositif d'éclairage 400 situé de l'autre côté, créant ainsi une grande disparité d'éclairement sur la face de l'individu. Pour une variation d'environ ±30° autour de la droite 404, la luminance peut être considérée comme constante. L'éclairement en un point est inversement proportionnel au carré de la distance entre ce point et le dispositif d'éclairage. Un individu se déplaçant d'un côté de l'axe de visée va ainsi être plus fortement éclairé par le dispositif d'éclairage de ce côté que par celui de l'autre côté.

Une solution à ce problème consiste à contraindre fortement la position de l'individu lors de la capture des images. Une telle solution n'est pas optimale du fait de cette contrainte qui peut gêner l'individu.

Le document US-A-5,550,928 divulgue un dispositif de reconnaissance permettant de reconnaître des individus placés devant un écran de télévision et comprenant un système de capture d'images.

Le système de capture comprend :
- deux caméras IR, chacune comprenant un axe de visée et les deux axes de visée étant concourants l'un avec l'autre, les caméras étant dirigées vers l'endroit où se situent les individus, et
- deux dispositifs d'éclairage disposés symétriquement par rapport à un axe central (qui est ici parallèle à l'élément 44) du dispositif et à distance de celui-ci, chacun comprenant des moyens de génération d'un flux lumineux destiné à éclairer les individus et dont le lobe d'éclairement représentatif de la luminance dans un plan horizontal comporte un maximum, les deux lobes étant symétriques l'un de l'autre par rapport à l'axe central.

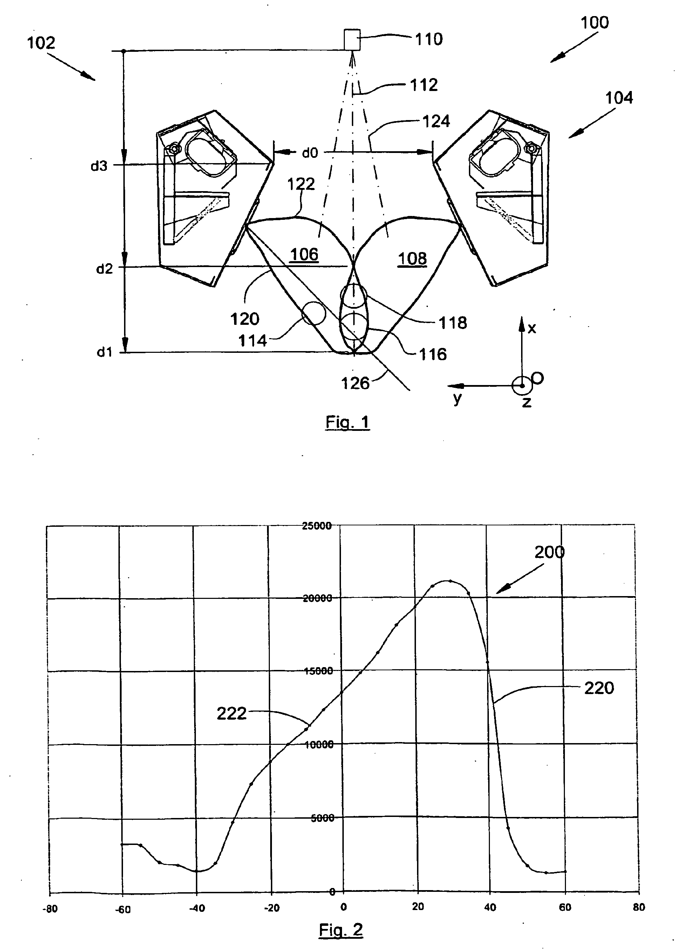

Comme cela est visible sur la Fig. 2 du document de l'état de la technique et dans la description correspondante, les dispositifs d'éclairage sont orientés pour favoriser un éclairement large de l'espace. En particulier, de par la configuration de chaque dispositif d'éclairage, chacun éclaire l'espace qui se trouve devant le système de capture et l'espace qui se trouve sur les côtés de celui-ci.

De par la construction de chaque dispositif d'éclairage, la droite portant le maximum est issue de chaque dispositif d'éclairage et n'est pas orientée vers l'axe central du système de capture mais dans une direction opposée à cet axe central.

L'utilisation de deux caméras permet de surveiller l'espace qui est éclairé sous cet angle large et globalement, chaque caméra surveille la zone éclairée par l'un des dispositifs d'éclairage et non la zone éclairée par les deux dispositifs d'éclairage.

Le dispositif de reconnaissance du document de l'état de la technique permet donc un éclairement large de l'espace amont, mais ne permet pas de focaliser l'éclairement vers une zone spécifique de cet espace, ce qui est souhaité dans le cas d'une analyse de la face d'un individu.

Un objet de la présente invention est de proposer un système de capture d'images de la face d'un individu qui ne présente pas les inconvénients de l'état de la technique, et qui, en particulier, autorise un positionnement plus libre de l'individu tout en assurant un éclairage homogène de sa face.

A cet effet, est proposé un système de capture d'images de la face d'un individu comprenant les caractéristiques selon la rev. independante 6.

Avantageusement, le système de capture d'images comprend un troisième dispositif d'éclairage situé au voisinage du sol et comprenant des moyens de génération d'un flux lumineux destiné à éclairer la face de l'individu lors de son déplacement et dont le lobe d'éclairement représentatif de la luminance dans le plan vertical comporte un maximum et les moyens de génération du flux lumineux sont tels que le lobe est dissymétrique par rapport à la droite portant ledit maximum et présente à partir de ce maximum, un premier front bombé et orienté vers l'individu et un deuxième front sensiblement plan et s'étendant du côté du dispositif de capture d'images.

Avantageusement, les moyens de génération comprennent une première source lambertienne et un film à micro-prismes, la normale à la première source lambertienne et la normale au film à micro-prismes présentant un angle non nul l'une avec l'autre.

Avantageusement, les moyens de génération comprennent une deuxième source lambertienne dont la normale présente un angle non nul avec la normale au film à micro-prismes.

Avantageusement, la normale à la première source lambertienne et la normale à la deuxième source lambertienne sont sensiblement orthogonales.

Avantageusement, le film à micro-prismes comprend une face plane orientée vers la ou les sources lambertiennes et une face portant des prismes.

L'invention propose également un système d'identification faciale comprenant les caractéristiques selon la rev. independante 8.

L'invention propose également un dispositif d'éclairage comprenant les caractéristiques selon la rev. independante 1.

Avantageusement, les moyens de génération comprennent une première source lambertienne et un film à micro-prismes, la normale à la première source lambertienne et la normale au film à micro-prismes présentant un angle non nul l'une avec l'autre.

Avantageusement, les moyens de génération comprennent une deuxième source lambertienne dont la normale présente un angle non nul avec la normale au film à micro-prismes.

Avantageusement, la normale à la première source lambertienne et la normale à la deuxième source lambertienne sont sensiblement orthogonales.

Avantageusement, le film à micro-prismes comprend une face plane orientée vers la ou les sources lambertiennes et une face portant des prismes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de dessus d'un système de capture d'images de la face d'un individu selon l'invention,
la Fig. 2 est un graphe caractérisant le lobe d'éclairement d'un dispositif d'éclairage selon l'invention,
la Fig. 3 représente une vue de dessus d'un dispositif d'éclairage selon l'invention,
la Fig. 4 représente une vue de dessus d'un dispositif d'éclairage de l'état de la technique, et
la Fig. 5 représente une vue en coupe par un plan vertical d'un dispositif d'éclairage selon l'invention.

La Fig. 1 est une vue de dessus d'un système de capture d'images 100 d'un individu qui comprend :
- un dispositif de capture d'images 110, du type caméra et présentant un axe de visée 112 dirigé vers l'endroit d'où arrive l'individu et un cône de capture 124 centré sur l'axe de visée 112, et
- deux dispositifs d'éclairage 102 et 104 disposés symétriquement par rapport à l'axe de visée 112 et à distance de celui-ci, chacun comprenant des moyens de génération d'un flux lumineux destiné à éclairer la face de l'individu lors de son déplacement et dont le lobe d'éclairement 106, 108 représentatif de la luminance dans un plan horizontal comporte un maximum, les deux lobes 106, 108 étant symétriques l'un de l'autre par rapport à l'axe de visée 112.

Les positions de la tête de l'individu sont représentées par les cercles référencés 114, 116et 118.

Le repère (*O,x̅, y̅, z̅*) est un repère direct, le plan (*O,x̅,y̅*) est parallèle au sol et il est orienté de manière à ce que la direction de l'axe des 'x' soit parallèle à la direction de l'axe de visée 112, c'est-à-dire à la direction générale de progression de l'individu, et à ce que la direction de l'axe des 'y' soit orthogonale à la direction de l'axe de visée 112. L'individu se déplace globalement dans le sens des 'x' croissants. Les éléments de la Fig. 1 sont vus en coupe par un plan horizontal mais ils s'étendent le long de l'axe des 'z' sous forme sensiblement cylindrique.

Les moyens de génération sont tels que chaque lobe 106, 108 est dissymétrique dans chaque plan horizontal par rapport à la droite référencée 126 portant ledit maximum et présente à partir de ce maximum, un premier front 122 bombé vers le dispositif de capture d'images 110 et un deuxième front 120 sensiblement plan et s'étendant du côté d'où vient l'individu. Du fait de cette configuration, la luminance autour du maximum n'est plus constante et varie fortement de part et d'autre de ce maximum. L'influence de la distance sur l'éclairement de la face de l'individu est alors minimisée dans un espace plus important de part et d'autre de l'axe de visée 112 et sur une distance plus importante le long de cet axe. Comme cela est visible sur la Fig. 1, pour chaque dispositif d'éclairage 102, 104, la droite 126 portant le maximum est issue de chaque dispositif d'éclairage 102, 104 et orientée vers l'axe de visée 112. L'axe de visée 112 et chaque droite 126 sont concourants sensiblement au même point.

Le deuxième front 120 est tel qu'un déplacement latéral de l'individu (position 114) entraîne une chute de l'éclairement du fait de l'éloignement du dispositif d'éclairage 104 disposé du côté opposé au déplacement et également une chute de l'éclairement du fait de la sortie de l'individu du lobe 106 généré par le dispositif d'éclairage 102 disposé du côté du déplacement. Même si l'éclairement de la face de individu diminue, il reste globalement homogène sur toute la face. L'image capturée par le dispositif de capture d'images 110 est alors homogène et elle peut subir un traitement sans risque de distorsion des informations qu'elle contient (par exemple : augmentation du contraste, de la sensibilité). Le deuxième front 120 limite ainsi la variation d'éclairage lorsque l'individu se déplace latéralement par rapport à l'axe de visée 112.

Le premier front 122 est tel qu'au cours de sa progression (position 116, puis position 118), l'individu reste soumis à l'éclairement des dispositifs d'éclairage 102 et 104 durant son déplacement en direction du dispositif de capture d'images 110. La face de l'individu est donc soumise à un éclairement homogène sur une distance plus grande dans la direction de l'axe 'x' que dans le cas d'un éclairement de l'état de la technique. Le premier front 122 limite ainsi la variation d'éclairage lorsque l'individu se déplace vers le dispositif de capture d'images 110. Au niveau du maximum, le premier front 122 est sensiblement parallèle à l'axe de visée 112.

Le système 100 de capture d'images de la face d'un individu de l'invention permet audit individu de pouvoir se positionner plus librement à l'intérieur du volume défini entre les deux dispositifs d'éclairage 102 et 104 tout en assurant un éclairage homogène de sa face dans ce volume.

La Fig. 2 est un graphe de la luminance (en cd/m²) reçue par un luminance-mètre en fonction de sa position angulaire (en degré) par rapport au dispositif d'éclairage 102 pour un mode de réalisation particulier de l'invention. Le luminance-mètre est disposé sur l'axe de visée dans une position dite position nominale de mesure et qui correspond sensiblement à celle du cercle référencé 116. Dans cette position nominale, l'angle entre le dispositif d'éclairage 102 et le luminance-mètre est considéré comme nul. La rotation du dispositif d'éclairage 102 autour d'un axe parallèle à l'axe 'z' permet de déterminer la courbe 200. La courbe 200 présente une première pente 222 correspondant au premier front 122 qui a une pente d'environ 290 cd/m² par degré de rotation. La courbe 200 présente également une deuxième pente 220 correspondant au deuxième front 120 qui a une pente d'environ -1600 cd/m² par degré de rotation, c'est-à-dire, au signe près, très supérieure à celle de la première pente 222. L'axe de rotation parallèle à l'axe 'z' est ici positionné au centre de la source lumineuse qui est décrite ci-après. Les valeurs numériques sont données à titre d'exemple et peuvent être différentes en fonction des caractéristiques techniques du système de capture d'images 100.

La Fig. 3 montre un dispositif d'éclairage 300 selon l'invention qui comprend une cage opaque 302 percée d'une fenêtre 314 et des moyens de génération constitués d'un verre dépoli 308 et d'une source lumineuse 304 du type néon disposée à l'intérieur de la cage 302 et émettant un flux lumineux à travers la fenêtre 314 après avoir traversé le verre dépoli 308. Afin de conformer le lobe d'éclairement émis par le dispositif d'éclairage 300 selon la forme décrite ci-dessus et portant la référence 106 sur la Fig. 1, les moyens de génération comprennent également un film à micro-prismes 312 disposé entre le verre dépoli 308 et la fenêtre 314 qui se comporte comme une première source lambertienne.

Le film à micro-prismes 312 comprend une face plane orientée vers le verre dépoli 308 et une face portant des prismes 316 orientée vers la fenêtre 314. Le film portant la référence "Vikuiti Brightness Enhancement Film (BEF) II" et fabriqué par la société 3M est un exemple de film à micro-prismes 312 pouvant être utilisé.

L'axe des prismes 316 qui est normal à la surface plane du film à micro-prismes 312 présente, avec la direction normale au verre dépoli 308, c'est-à-dire avec la direction normale à la première source lambertienne, un angle différent de zéro, et de préférence de l'ordre de 45°. Par la présence de cet angle, le film à micro-prismes 312 redirige les faisceaux lumineux qui sont diffusés à travers le verre dépoli 308 sous la forme d'un spectre de luminance dissymétrique conforme à celui référencé 106 sur la Fig. 1.

Afin de canaliser le maximum d'intensité lumineuse émise par la source lumineuse 304, les côtés de celle-ci, qui ne sont pas orientés vers le verre dépoli 308, peuvent être entourés de surfaces réfléchissantes 306.

La direction de la droite 126 portant le maximum est sensiblement confondue avec la normale à la surface plane du film à micro-prismes 312.

Afin d'augmenter encore la dissymétrie du lobe d'éclairement, les moyens de génération comprennent un écran réfléchissant 310, disposé en aval du verre dépoli 308 et en amont du film à micro-prismes 312 et qui constitue une deuxième source lambertienne qui réfléchit les faisceaux lumineux provenant de la première source lambertienne. La normale à la deuxième source lambertienne 310 présente un angle non nul avec la normale au film à micro-prismes 312.

En particulier, la normale à la première source lambertienne 304, 308 et la normale à la deuxième source lambertienne 310 sont sensiblement orthogonales. Les faisceaux lumineux, qui sont réfléchis par cet écran réfléchissant 310, viennent augmenter la forme bombée du premier front 122.

Du fait que la tolérance au positionnement de l'individu est plus grande que dans le cas de l'état de la technique, il est possible d'augmenter l'espacement entre les deux dispositifs d'éclairage 102 et 104, c'est-à-dire la largeur de passage, et d'obtenir ainsi un système de capture d'images 100 plus large.

La mise en place et l'orientation de chaque dispositif d'éclairage 102, 104 sont réalisées en fonction de la largeur de passage souhaitée.

Selon un mode de réalisation particulier de l'invention, la largeur de passage référencée d0 vaut 800 mm. La distance du passage au dispositif de capture d3 vaut 1,05 m. La distance référencée d1 correspondant au début d'éclairement de la face vaut 1,90 m. La distance référencée d2 correspondant à la fin d'éclairement de la face vaut 1,40 m. Dans ces conditions, la droite d'angle 0° du graphe de la Fig. 2 correspond à la droite issue de la fenêtre 314 du dispositif d'éclairage 102 et coupant l'axe de visée 112 sous un angle d'environ 55°. La puissance de la source lumineuse 304 étant adaptée de manière à réaliser un éclairement non saturé, la droite 126 forme ainsi un angle d'environ 27° (voir Fig. 2) avec la droite à 55°.

La position de la tête référencée 116 correspond à une position nominale de capture de la face qui est décalée de préférence de l'ordre de 5° à 10° (ici 10°) en amont par rapport à la droite 126. Dans ce mode de réalisation, la droite issue de la fenêtre 314 et passant par la position nominale forme un angle de 17° avec la droite à 55°, et la droite issue de la fenêtre 314 et passant par une position en amont de 550 mm sur l'axe de visée 112 par rapport à la position nominale forme un angle de 11 ° avec la droite à 55°.

De la même manière, pour un décalage latéral de 300 mm par rapport à l'axe de visée 112 à l'abscisse d1, la droite issue de la fenêtre 314 et passant par cette position forme un angle de 40° avec la droite à 55°. Pour un décalage latéral de 300 mm par rapport à l'axe de visée 112 à l'abscisse d2, la droite issue de la fenêtre 314 et passant par cette position forme un angle de 37° avec la droite à 55°.

Ces différentes valeurs qui sont données à titre d'exemple, montrent le volume dans lequel l'individu peut se déplacer tout en conservant un éclairement optimal de sa face.

La mise en place du système de capture 100 est dépendante de la largeur de passage d0 désirée. Lorsque cette largeur de passage d0 est fixée, le dispositif de capture d'images 110 est placé et chaque dispositif d'éclairage 102, 104 est positionné et orienté de manière à optimiser le volume dans lequel l'individu peut se positionner tout en conservant un éclairement optimal de sa face.

Un système d'identification faciale comprend un système de capture 100 d'images de la face de l'individu selon l'invention et une unité de traitement comprenant des moyens pour traiter les images capturées par le système de capture d'images 100, analyser lesdites images ainsi traitées et identifier chaque individu passant entre les deux dispositifs d'éclairage 102 et 104 à partir de ladite analyse.

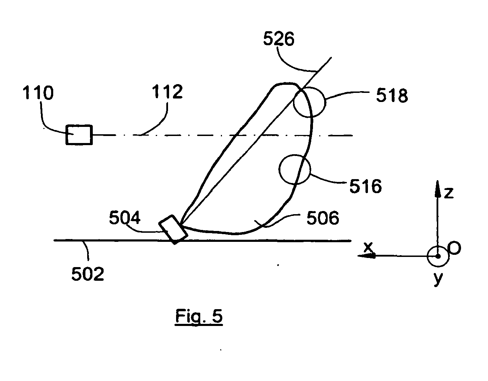

La Fig. 5 est une vue en coupe par un plan vertical passant par l'axe de visée 112 d'un autre mode de réalisation de l'invention.

Le système de capture d'images 100 comprend en outre un troisième dispositif d'éclairage 504 situé de préférence à la verticale de l'axe de visée 112 et au voisinage du sol 502 sur lequel se déplace l'individu. Le troisième dispositif d'éclairage 504 comprend des moyens de génération d'un flux lumineux destiné à éclairer la face de l'individu lors de son déplacement et dont le lobe d'éclairement 506 représentatif de la luminance dans le plan vertical comporte un maximum. La droite référencée 526 est issue du dispositif d'éclairage 504 et porte ledit maximum. Les moyens de génération du flux lumineux sont tels que le lobe 506 est dissymétrique par rapport à la droite 526 et présente à partir de ce maximum, un premier front 522 bombé et orienté vers l'individu et un deuxième front 520 sensiblement plan et s'étendant du côté du dispositif de capture d'images 110.

Les cercles référencés 516 et 518 représentent respectivement la position de la tête d'un individu de petite taille et la position de la tête d'un individu de grande taille.

Le troisième dispositif d'éclairage 504 permet de conserver un éclairement sensiblement identique pour tous les individus quelle que soit leur taille, c'est-à-dire leur distance par rapport au troisième dispositif d'éclairage 504.

Le premier front 522 est sensiblement vertical. La luminance pour chaque individu est alors sensiblement équivalente et ceci quelle que soit leur taille, c'est-à-dire quel que soit l'angle entre la droite 526 et la position de la tête de l'individu.

Dans la mesure où l'éclairement en un point est inversement proportionnel au carré de la distance de ce point au dispositif d'éclairage et proportionnel à la luminance en ce point, elle-même dépendante de l'angle entre la droite 526 et la position de ce point, le lobe 506 tel qu'il est défini permet de moduler la luminance afin d'obtenir un éclairement sensiblement constant pour tous les individus.

Le troisième dispositif d'éclairage 504 est similaire aux dispositifs d'éclairage 102 et 104 précédents et comporte une source lumineuse émettant un flux lumineux et un film à micro-prismes traversé par ledit flux lumineux.

Bien entendu, la présente invention n'est pas limitée aux exemples et modes de réalisation décrits et représentés, mais elle est susceptible de nombreuses variantes accessibles à l'homme de l'art, sans sortir de l'objet des revendications.

## Revendications

1. Dispositif d'éclairage (102, 104, 300) comprenant des moyens de géneration d'un flux lumineux dont le lobe d'éclairement (106, 108) comportant un maximum, est représentatif de sa luminance dans un plan horizontal, les moyens de génération comportant des moyens pour former un lobe d'éclairement (106, 108) dissymétrique par rapport à la droite portant le maximum et présentant à partir de ce maximum, un premier front (122) bombé et un deuxième front (120) sensiblement plan, le dispositif d'éclairage (102, 104, 300) comprenant:
- une cage opaque (302) percée d'une fenêtre (314), et
- les moyens de génération comprenant eux-mêmes:
- un verre dépoli (308) disposé à l'intérieur de la cage (302),
- une source lumineuse (304) disposée à l'intérieur de la cage (302), et
- un film à micro-prismes (312) disposé incliné entre le verre dépoli (308) et la fenêtre (314) et comprenant une face plane orientée vers le verre dépoli (308) et une face portant des prismes (316) orientée vers la fenêtre (314),
ladite source lumineuse (304) émettant un flux lumineux à travers la fenêtre (314) ayant traversé le verre dépoli (308), et le film à micro-prismes (312).

2. Dispositif d'éclairage (102, 104, 300) selon la revendication 1, **caractérisé en ce que** l'axe des prismes (316) est normal à la surface plane dudit fi lm à micro-prismes (312) et présente, avec la direction normale au verre dépoli (308), un angle différent de zéro.

3. Dispositif d'éclairage (102, 104, 300) selon la revendication 2, **caractérisé en ce que** ledit angle est de l'ordre de 45°.

4. Dispositif d'éclairage (102, 104, 300) selon l'une des revendications 1 à 3, **caractérisé en ce que** les côtés de la source lumineuse (304) qui ne sont pas orientés vers le verre dépoli (308) sont entourés de surfaces réfléchissantes (306).

5. Dispositif d'éclairage (102, 104, 300) selon l'une des revendications 1 à 4 **caractérisé en ce que** les moyens de génération comprennent en outre un écran réfléchissant (310), disposé en aval du verre dépoli (308) et en amont du film à micro-prismes (312) et dont la normale présente un angle non nul avec la normale au film à micro-prismes (312).

6. Système de capture d'images (100) de la face d'un individu comprenant :
- un dispositif de capture d'images (110) présentant un axe de visée (112) dirigé vers l'endroit d'où arrive l'individu, et
- deux dispositifs d'éclairage (102, 104, 300) selon l'une des revendications 1 à 5 disposés symétriquement par rapport à l'axe de visée (112) et à distance de celui-ci, les lobes (106, 108) générés par chacun des dispositifs d'éclairage (102, 104, 300) étant symétriques l'un de l'autre par rapport à l'axe de visée (112), et pour chaque dispositif d'éclairage (102, 104), la droite (126) portant le maximum est orientée vers l'axe de visée (112) vers le devant du dispositif de capture d'images (110).

7. Système de capture d'images (100) selon la revendication 6, **caractérisé en ce qu'**il comprend un troisième dispositif d'éclairage (504) situé au voisinage du sol (502) et comprenant des moyens de génération d'un flux lumineux destiné à éclairer la face de l'individu lors de son déplacement et dont le lobe d'éclairement (506) représentatif de la luminance dans le plan vertical comporte un maximum et **en ce que** les moyens de génération du flux lumineux sont tels que le lobe (506) est dissymétrique par rapport à la droite (526) portant ledit maximum et présente à partir de ce maximum, un premier front (522) bombé et orienté vers l'individu et un deuxième front (520) sensiblement plan et s'étendant du côté du dispositif de capture d'images (110).

8. Système d'identification faciale comprenant un système de capture d'images (100) selon l'une des revendications 6 ou 7 et une unité de traitement comprenant des moyens pour traiter les images capturées par le système de capture d'images (100), analyser lesdites images ainsi traitées et identifier chaque individu à partir de ladite analyse.

## Claims

1. Illumination device (102, 104, 300) comprising means to generate a light flux, the illumination lobe (106, 108) of which, comprising a maximum, is representative of its luminance in a horizontal plane, the generation means comprising means adapted to form an illumination lobe (106, 108) that is asymmetric with respect to the straight line bearing the maximum and having, from this maximum, a first front (122) that is curved and a second front (120) that is substantially plane, the illumination device (102, 104, 300) comprising:
- an opaque cage (302) with a window (314) made therein, and
- the generating means comprising themselves:
- a frosted glass (308) disposed inside the cage (302),
- a light source (304) disposed inside the cage (302) and
- a micro-prism film (312) disposed, tilted, between the frosted glass (308) and the window (314) and comprising a plane face oriented towards the frosted glass (308) and a face bearing prisms (316) oriented towards the window (314),
said light source (304) emitting a light flux through the window (314) having passed through the frosted glass (308) and the micro-prism film (312).

2. Illumination device (102, 104, 300) according to Claim 1, **characterised in that** the axis of the prisms (316) is normal to the plane face of the micro-prism film (312) and makes, with the direction normal to the frosted glass (308), an angle different from zero.

3. Illumination device (102, 104, 300) according to Claim 2, **characterised in that** said angle is of the order of 45°.

4. Illumination device (102, 104, 300) according to any of the Claims 1 to 3, **characterised in that** the sides of the light source (304) which are not oriented towards the frosted glass (308), are surrounded by reflective surfaces (306).

5. Illumination device (102, 104, 300) according to any of the Claims 1 to 4, **characterised in that** the generation means comprise also a reflective screen (310), disposed downstream of the frosted glass (308) and upstream of the micro-prism film (312) and the normal thereof makes a non-zero angle with the normal to the micro-prism film (312).

6. System (100) for capturing images of a face of an individual comprising:
- an image capture device (110) having a line of sight (112) directed towards the place from where the individual arrives, and
- two illumination devices (102, 104, 300) according to any of the Claims 1 to 5 disposed symmetrically with respect to the line of sight (112) and at a distance therefrom, the lobes (106, 108) generated by each of the illumination devices (102, 104, 300) being symmetrical with one another with respect to the line of sight (112) and, for each illumination device (102, 104), the straight line (126) bearing the maximum is oriented towards the line of sight (112) toward the front of the image capture device (110).

7. System (100) for capturing images according to Claim 6, **characterised in that** it comprises a third illumination device (504) situated in the vicinity of the ground (502) and comprising means of generating a light flux intended to illuminate the face of the individual as he moves and whereof the illumination lobe (506), representative of the luminance in the vertical plane, has a maximum, and **in that** the light flux generation means are such that the lobe (506) is asymmetric with respect to the straight line (526) bearing said maximum and has, from this maximum, a first front (522) that is curved and oriented towards the individual and a second front (520) that is substantially plane and extending on the side of the image capture device (110).

8. Face identification system comprising an image capture system (100) according to any of the Claims 6 or 7 and a processing unit comprising means for processing the images captured by the image capture system (100), analysing said images thus processed and identifying each individual using said analysis.

## Patentansprüche

1. Beleuchtungsvorrichtung (102, 104, 300), enthaltend Mittel zum Erzeugen eines Lichtstroms, dessen Beleuchtungskeule (106, 108), die ein Maximum aufweist, repräsentativ für ihre Leuchtdichte in einer horizontalen Ebene ist, wobei die Erzeugungsmittel Mittel zum Bilden einer Beleuchtungskeule (106, 108) enthalten, die in Bezug auf die das Maximum aufweisende rechte Seite unsymmetrisch ist und von diesem Maximum ausgehend eine erste gewölbte Vorderseite (122) und eine zweite, im Wesentlichen ebene Vorderseite (120) aufweist, welche Beleuchtungsvorrichtung (102, 104, 300) enthält:
- ein lichtundurchlässiges Gehäuse (302), das von einem Fenster (314) durchbrochen ist, und
- die Erzeugungsmittel, die wiederum enthalten:
- ein im Inneren des Gehäuses (302) angeordnetes mattiertes Glas (308),
- eine im Inneren des Gehäuses (302) angeordnete Lichtquelle (304),
- eine schräg zwischen dem mattierten Glas (308) und dem Fenster (314) angeordnete Mikroprismenfolie (312), die eine ebene, zum mattierten Glas (308) hin ausgerichtete Seite und eine die Prismen (316) tragende, zum Fenster (314) hin ausgerichtete Seite aufweist,
wobei die Lichtquelle (304) einen Lichtstrom durch das Fenster (314) aussendet, nachdem er das mattierte Glas (308) und die Mikroprismenfolie (312) durchquert hat.

2. Beleuchtungsvorrichtung (102, 104, 300) nach Anspruch 1, **dadurch gekennzeichnet, dass** die Achse der Prismen (316) zur ebenen Oberfläche der Mikroprismenfolie (312) senkrecht verläuft und mit der zum mattierten Glas (308) senkrechten Richtung einen von Null verschiedenen Winkel hat.

3. Beleuchtungsvorrichtung (102, 104, 300) nach Anspruch 2, **dadurch gekennzeichnet, dass** der Winkel eine Größenordnung von 45° aufweist.

4. Beleuchtungsvorrichtung (102, 104, 300) nach einem der Ansprüche 1 bis 3,
**dadurch gekennzeichnet, dass** die Seiten der Lichtquelle (304), die nicht zu dem mattierten Glas (308) hin ausgerichtet sind, von reflektierenden Oberflächen (306) umgeben sind.

5. Beleuchtungsvorrichtung (102, 104, 300) nach einem der Ansprüche 1 bis 4,
**dadurch gekennzeichnet, dass** die Erzeugungsmittel des Weiteren einen reflektierenden Schirm (310) aufweisen, der nach dem mattierten Glas (308) und vor der Mikroprismenfolie (312) angeordnet ist und dessen Senkrechte einen Nicht-Null-Winkel mit der Senkrechten zur Mikroprismenfolie (312) bildet.

6. System zum Aufnehmen von Bildern (100) des Gesichts eines Individuums, enthaltend:
- eine Vorrichtung zum Aufnehmen von Bildern (110), die eine optische Achse (112) aufweist, die auf die Stelle hin ausgerichtet ist, an der das Individuum eintrifft, und
- zwei Beleuchtungsvorrichtungen (102, 104, 300) nach einem der Ansprüche 1 bis 5 die in Bezug auf die optische Achse (112) symmetrisch und von dieser beabstandet angeordnet sind, wobei die von jeder der Beleuchtungsvorrichtungen (102, 104, 300) erzeugten Keulen (106, 108) zueinander in Bezug auf die optische Achse (112) und für jede Beleuchtungsvorrichtung (102, 104) symmetrisch sind, wobei die das Maximum aufweisende rechte Seite zu der optischen Achse (112) zur Vorderseite der Vorrichtung zum Aufnehmen von Bildern hin ausgerichtet ist.

7. System zum Aufnehmen von Bildern (100) nach Anspruch 6, **dadurch gekennzeichnet, dass** es eine dritte Beleuchtungsvorrichtung (504) aufweist, die sich benachbart zum Boden (502) befindet und Mittel zum Erzeugen eines Lichtstroms enthält, der dazu bestimmt ist, das Gesicht des Individuums während seiner Bewegung zu beleuchten, und dessen Beleuchtungskeule (506), die für die Leuchtdichte in der vertikalen Ebene repräsentativ ist, ein Maximum aufweist, und dadurch, dass die Mittel zum Erzeugen des Lichtstroms dergestalt sind, dass die Keule (506) in Bezug auf die das Maximum aufweisende rechte Seite (526) unsymmetrisch ist und, ausgehend von diesem Maximum, eine erste gewölbte und zum Individuum hin ausgerichtete Vorderseite (522) und eine zweite, im Wesentlichen ebene und von der Seite der Vorrichtung zum Aufnehmen von Bildern (110) ausgehende Vorderseite (520) aufweist.

8. System zur Gesichtsidentifizierung, enthaltend ein System zum Aufnehmen von Bildern (100) nach einem der Ansprüche 6 oder 7 und eine Bearbeitungseinheit, die Mittel zum Bearbeiten der vom System zum Aufnehmen von Bildern (100) aufgenommenen Bilder, zum Analysieren der auf diese Weise bearbeiteten Bilder und zum Identifizieren jedes Individuums basierend auf dieser Analyse enthält.
